# EUROPEAN PATENT APPLICATION

(11) **EP 4 564 180 A1**
(43) Date of publication of application: **04.06.2025**
(21) Application number: 23864399.3
(22) Date of filing: 19.06.2023
(51) Int. Cl.: G06F 12/06

(54) **DATA COMPUTING METHOD AND APPARATUS, AND DEVICE**

(30) Priority: 13.09.2022 CN 202211112007; 24.11.2022 CN 202211483427
(71) Applicant: Huawei Technologies Co., Ltd., Shenzhen, Guangdong 518129 (CN)
(72) Inventor: ZHU, Xiaoming, Shenzhen, Guangdong 518129 (CN)
(74) Representative: Huawei European IPR
(86) International application number: PCT/CN2023/101000
(87) International publication number: WO 2024/055660

(57) **Abstract**

A data operation method and apparatus, and a device are provided. In this application, a processing device sends an operation request to a storage device, where the operation request is used to request to perform a first operation. After receiving the operation request, the storage device obtains, based on the operation request, an operation rule of the first operation and an operation parameter required by the first operation, where the operation rule of the first operation describes a plurality of second operations obtained after the first operation is split and a performing sequence of the plurality of second operations, and the operation parameter required by the first operation includes operation parameters required by the plurality of second operations. The storage device sequentially invokes, based on the performing sequence of the plurality of second operations that is described based on the operation rule of the first operation, hardware operators of the plurality of second operations and the operation parameters required by the plurality of second operations, to perform the plurality of second operations, to further complete the first operation. This improves flexibility of implementing a data operation by the storage device.

## Description

### CROSS-REFERENCE TO RELATED APPLICATIONS

This application claims priority to Chinese Patent Application No. 202211112007.3, filed with the China National Intellectual Property Administration on September 13, 2022 and entitled "STORAGE DEVICE", which is incorporated herein by reference in its entirety. This application claims priority to Chinese Patent Application No. 202211483427.2, filed with the China National Intellectual Property Administration on November 24, 2022 and entitled "DATA OPERATION METHOD AND APPARATUS, AND DEVICE", which is incorporated herein by reference in its entirety.

### TECHNICAL FIELD

This application relates to the field of communication technologies, and in particular, to a data operation method and apparatus, and a device.

### BACKGROUND

A process in memory (Process in Memory, PIM) technology means combining data storage and computing capabilities, and completing computing at a nearest location to data, to reduce invalid data projection. The PIM technology completes data computing through a computing unit near a data side, and does not need to occupy a processor in a device. The PIM technology can also assist the processor in completing some data computing work. This supplements computing power of the processor to some extent.

In the PIM technology, a compute near memory (compute near memory, CNM) is commonly used. The CNM means adding a computing unit to a peripheral circuit of a storage medium such as memory, to implement memory processing.

Currently, some applications have CNM memory that inserts a computing unit for implementing specific computing. The computing unit includes a hardware structure that can implement specific computing, and the specific computing may be performed in the memory by using the hardware structure on data in the storage medium or data that needs to be stored in the storage medium. Because the specific computing is implemented in the memory through the computing unit having the hardware structure, computing that can be implemented is single, and flexibility is poor.

### SUMMARY

This application provides a data operation method and apparatus, and a device, to improve operation flexibility in a storage device to which a CNM is applied.

According to a first aspect, an embodiment of this application provides a data operation method. The method is applied to a storage device. In the method, a processing device may send an operation request (for example, a first operation request or a second operation request in the embodiment part) to the storage device, where the operation request is used to request to perform a first operation (where the first operation corresponds to a composite operation in the embodiment part).

After receiving the operation request, the storage device obtains, based on the operation request, an operation rule of the first operation and an operation parameter required by the first operation, where the operation rule of the first operation describes a plurality of second operations obtained after the first operation is split (where the second operations correspond to basic operations in the embodiment part) and a performing sequence of the plurality of second operations, and the operation parameter required by the first operation includes operation parameters required by the plurality of second operations. The storage device may perform the first operation based on the operation rule of the first operation and the operation parameter required by the first operation. For example, the storage device may sequentially invoke, based on the performing sequence that is of the plurality of second operations and that is described based on the operation rule of the first operation, hardware operators of the plurality of second operations and the operation parameters required by the plurality of second operations, to perform the plurality of second operations, to further complete the first operation.

According to the foregoing method, the first operation can be split into the plurality of second operations. When performing the first operation, the storage device only needs to invoke, based on the performing sequence of the plurality of second operations obtained after the first operation is split, the hardware operators of the second operations and the operation parameters required by the plurality of second operations, to complete the first operation. The storage device does not need to update an internal hardware structure, but may complete the first operation by learning of the operation rule of the first operation and the operation parameter required by the first operation, so that the storage device can flexibly implement various data operations.

In a possible implementation, the processing device may preconfigure the operation rule of the first operation in the storage device. For example, the processing device may send a rule configuration request to the storage device, where the rule configuration request is used to request to configure the operation rule of the first operation, and the rule configuration request carries the operation rule of the first operation and a logical address of the operation rule of the first operation. After receiving the rule configuration request, the storage device stores the operation rule of the first operation in a storage location indicated by the logical address of the operation rule of the first operation.

According to the foregoing method, the storage device obtains the operation rule of the first operation in advance at a request of the processing device, so that the storage device can efficiently complete the first operation subsequently.

In a possible implementation, before the storage device needs to perform the first operation, the processing device may further configure, in the storage device, the operation parameter required by the first operation. For example, the processing device may send a parameter configuration request (for example, a first parameter configuration request in the embodiment part) to the storage device, where the parameter configuration request is used to request to configure the operation parameter required by the first operation, and the parameter configuration request carries the operation parameter required by the first operation and a logical address of the operation parameter required by the first operation. After receiving the parameter configuration request, the storage device stores the operation rule required by the first operation in a storage location indicated by the logical address of the operation parameter required by the first operation.

According to the foregoing method, the storage device can obtain, from the processing device, the operation parameter required by the first operation, so that the storage device can subsequently complete the first operation by using the operation parameter.

In a possible implementation, the processing device may request the storage device to reserve the storage locations for the operation rule of the first operation and the operation parameter required by the first operation, and notify the storage device of the logical addresses of the operation rule of the first operation and the operation parameter required by the first operation.

The storage device reserves, at the request of the processing device, the storage locations for the operation rule of the first operation and the operation parameter required by the first operation, and establishes a correspondence between the logical addresses and physical addresses of the operation rule of the first operation and the operation parameter required by the first operation. The logical addresses of the operation rule of the first operation and the operation parameter required by the first operation are logical addresses of the storage locations.

According to the foregoing method, the storage device reserves the storage locations for the operation rule of the first operation and the operation parameter required by the first operation. The storage device may subsequently write the operation rule of the first operation and the operation parameter required by the first operation into the storage locations, to further ensure that when the storage device needs to perform the first operation, the operation rule of the first operation and the operation parameter required by the first operation may be obtained.

In a possible implementation, the storage device may also independently reserve the storage locations for the operation rule of the first operation and the operation parameter required by the first operation. The storage device provides, for the processing device, the logical addresses of the operation rule of the first operation and the operation parameter required by the first operation.

According to the foregoing method, the processing device can obtain, from the storage device, the logical addresses of the operation rule of the first operation and the operation parameter required by the first operation, so that the processing device can configure, for the storage device by sending a configuration request (for example, the rule configuration request or the parameter configuration request) that carries the logical address of the operation rule of the first operation or of the operation parameter required by the first operation, the operation rule of the first operation or the operation parameter required by the first operation.

In a possible implementation, the hardware operators of the plurality of second operations are hardware logics built in the storage device.

According to the foregoing method, the hardware logics are built in the storage device, and the storage device can directly implement the second operation through the hardware logics.

In a possible implementation, the operation request includes a virtual address of the first operation, and the virtual address of the first operation is separately associated with the storage locations of the operation rule of the first operation and the operation parameter required by the first operation. When obtaining, based on the operation request, the operation rule of the first operation and the operation parameter required by the first operation, the storage device may obtain, from the storage locations associated with the virtual address of the first operation, the operation rule of the first operation and the operation parameter required by the first operation.

According to the foregoing method, after receiving the operation request that carries the virtual address of the first operation, the storage device can determine that the first operation request is an operation request that carries a computing task, to obtain, from the storage locations associated with the virtual address of the first operation, the operation rule of the first operation and the operation parameter required by the first operation, and perform the first operation.

In a possible implementation, the storage device obtains the virtual address configured by the processing device for the first operation, where the virtual address of the first operation indicates to perform the first operation. After obtaining the virtual address of the first operation, the storage device may establish an association between the virtual address of the first operation and each of the storage locations of the operation rule of the first operation and the operation parameter required by the first operation.

According to the foregoing method, the storage device can obtain the virtual address of the first operation from the processing device, to associate the virtual address with the storage locations of the operation rule of the first operation and the operation parameter required by the first operation.

In a possible implementation, the storage device includes a medium chip, the medium chip includes a medium array and a computing circuit logic, the medium array is configured to store data, the computing circuit logic is configured to perform the first operation on data in the medium array or data to be written into the medium array, and the medium array and the computing circuit logic are located in the storage device in a stacked form.

According to the foregoing method, the computing circuit logic is located in the medium chip. In this way, the computing circuit logic may perform the first operation, to improve flexibility of a CNM.

In a possible implementation, the computing circuit logic includes a cache and the hardware operators of the plurality of second operations, and the cache stores the operation rule of the first operation and the operation parameter required by the first operation. The computing circuit logic may complete the first operation by using the operation rule of the first operation and the operation parameter required by the first operation.

According to the foregoing method, the computing circuit logic stores the operation rule of the first operation and the operation parameter required by the first operation, and the computing circuit logic can conveniently obtain the operation rule of the first operation and the operation parameter required by the first operation.

In a possible implementation, the storage device and the processing device may be connected through a system bus, or may be connected through a network.

According to the foregoing method, a connection manner between the storage device and the processing device is flexible, and is applicable to different scenarios.

According to a second aspect, this application further provides a storage device. The storage device has a function of implementing behavior in the method example according to the first aspect. For beneficial effects, refer to descriptions in the first aspect. Details are not described herein again. The storage device includes at least one medium chip, and the medium chip includes a medium array and a computing circuit logic.

The medium array is configured to store data.

The computing circuit logic is configured to: obtain an operation rule of a first operation and an operation parameter required by the first operation, where the operation rule of the first operation describes a plurality of second operations obtained after the first operation is split and a performing sequence of the plurality of second operations, and the operation parameter required by the first operation includes operation parameters required by the plurality of second operations; and perform the first operation on data in the medium array based on the operation rule of the first operation and the operation parameter required by the first operation.

In a possible implementation, the computing circuit logic includes hardware operators of the plurality of second operations and a cache, and the cache stores the operation rule of the first operation and the operation parameter required by the first operation. When the computing circuit logic performs the first operation, the computing circuit logic may obtain the operation rule of the first operation and the operation parameter required by the first operation from the cache; and sequentially invoke, based on the performing sequence of the plurality of second operations, the hardware operators of the plurality of second operations and the operation parameters required by the plurality of second operations, to perform the plurality of second operations on the data in the medium array.

In a possible implementation, the medium array and the computing circuit logic may be located on a same plane, or the medium array and the computing circuit logic may be placed in a stacked manner.

In a possible implementation, the storage device further includes a medium controller. The medium controller receives a rule configuration request (for example, a first rule configuration request mentioned in subsequent embodiments) from a processing device, where the rule configuration request is used to request to configure the operation rule of the first operation. After receiving the rule configuration request, the medium controller may configure the operation rule of the first operation for the computing circuit logic. The medium controller receives a parameter configuration request (for example, a first parameter configuration request mentioned in the subsequent embodiments) from the processing device, where the parameter configuration request is used to request to configure the operation parameter required by the first operation, and configure, for the computing circuit logic, the operation parameter required by the first operation.

In a possible implementation, the medium controller may further receive an operation request (for example, a first operation request and a second operation request mentioned in the subsequent embodiments) from the processing device, where the operation request is used to request to perform the first operation; and send an operation indication to the computing circuit logic, where the operation indication indicates the computing circuit logic to perform the first operation.

According to a third aspect, this application further provides a data operation apparatus. A function may be implemented by hardware, or may be implemented by hardware by executing corresponding software. The hardware or the software includes one or more units corresponding to the foregoing function. In a possible design, a structure of the apparatus includes a transmission module and an operation module, and optionally further includes a preconfiguration module. These modules may perform corresponding functions of the storage device in the method example according to the first aspect. For details, refer to detailed descriptions in the method example. Details are not described herein again.

According to a fourth aspect, this application further provides a computer-readable storage medium. The computer-readable storage medium stores instructions. When the instructions are run on a computer, the computer is enabled to perform the method according to the first aspect and the possible implementations of the first aspect.

According to a fifth aspect, this application further provides a computer program product including instructions. When the computer program product runs on a computer, the computer is enabled to perform the method according to the first aspect and the possible implementations of the first aspect.

According to a sixth aspect, this application further provides a computer chip. The chip is connected to a memory, and the chip is configured to read and execute a software program stored in the memory, to perform the method according to the first aspect and the possible implementations of the first aspect.

### BRIEF DESCRIPTION OF DRAWINGS

FIG. 1 is a schematic diagram of structures of an operation rule table and an operation parameter table according to this application;
FIG. 2 is a schematic diagram of a system architecture according to this application;
FIG. 3 is a schematic diagram of a structure of a storage device according to this application;
FIG. 4A and FIG. 4B are schematic diagrams of structures of a medium array and a computing circuit logic according to this application;
FIG. 5 is a schematic diagram of a data operation method according to this application; and
FIG. 6 is a schematic diagram of a structure of a data operation apparatus according to this application.

### DESCRIPTION OF EMBODIMENTS

Before a data operation method and apparatus, and a device provided in embodiments of this application are described, some concepts in embodiments of this application are first clarified.

### (1) Data operation.

Embodiments of this application relate to two types of data operations. One type is an operation with high complexity, and the operation can be further split into a plurality of operations with low complexity. The other type is an operation with low complexity, and does not need to be further split. For ease of differentiation, the operation with high complexity is referred to as a composite operation, and the operation with low complexity is referred to as a basic operation.

In embodiments of this application, a storage device has a function of performing the basic operation. For example, operators for implementing the basic operation are disposed inside the storage device. The storage device can invoke these operators to implement the basic operation. For the composite operation, no operator for the composite operation is disposed in the storage device. Because the composite operation can be split into a plurality of basic operations, the storage device may learn of the plurality of basic operations obtained after the composite operation is split, a performing sequence of the plurality of basic operations, and an invoked operation parameter required by the composite operation. The storage device sequentially invokes, based on the performing sequence of the plurality of basic operations, operators of the plurality of basic operations and operation parameters, to perform the plurality of basic operations, to complete the composite operation.

It may be learned that the composite operation or the basic operation is not one or more specific operations. Actually, the composite operation and the basic operation are divided based on an operation that can be independently completed by the storage device. An operation that can be independently completed by the storage device by using an internal operator may be understood as the basic operation. The storage device needs to additionally learn that an operation that can be completed based on the performing sequence of the plurality of basic operations and by invoking the operators of the plurality of basic operations may be used as the composite operation. In other words, for the storage device, an operation that can be completed only after being split is the composite operation, and an operation that can be completed without being split is the basic operation.

For example, the storage device is provided with an operator that can implement a filtering (filter) operation, an operator that can implement a scanning (scan) operation, an operator that can implement a data projection (project) operation, an operator that can implement an addition operation, and an operator that can implement a sorting operation. The filtering operation is to filter data that meets a condition from a plurality of pieces of data, the scanning operation is used to scan data in a specified data address range, and the data projection operation is used to project data from one data address to another data address. Therefore, for the storage device, the filtering operation, the scanning operation, the data projection operation, and the addition operation are basic operations.

If there is an operation requiring projecting data that meets a specific condition in a plurality of pieces of data in a specific data address range to another data address range, an operator of the operation is not disposed inside the storage device, and the storage device cannot directly invoke the operator to implement the operation, the operation belongs to a composite operation.

If there is an operation requiring sorting a plurality of pieces of data in a plurality of data address ranges, an operator of the operation is not disposed inside the storage device, and the storage device cannot directly invoke the operator to implement the operation, the operation belongs to a composite operation.

### (2) Operation rule of the composite operation and operation parameter required by the composite operation.

For any composite operation, the composite operation may be split, and the composite operation may be split into a plurality of basic operations that are sequentially performed.

The operation rule of the composite operation describes the plurality of basic operations obtained after the composite operation is split and the performing sequence of the plurality of basic operations.

For example, a composite operation 1 requiring projecting data that meets a condition in a plurality of pieces of data in a data address range to another data address range may be split into a scanning operation, a filtering operation, and a data projection operation. Specific content of the condition is related to an operation scenario in which the composite operation 1 needs to be performed, and the specific content of the condition is not limited herein. For example, the condition may be equal to a target value, greater than the target value, or the like.

An operation process of the composite operation 1 is as follows:
Operation 1: Perform the scanning operation, and scan a plurality of pieces of data in a data address range, where an operation parameter required by the scanning operation is the data address range.
Operation 2: Perform the filtering operation, and filter data that meets a condition from the plurality of pieces of data read in Operation 1, where operation parameters required by the filtering operation are the plurality of pieces of data read in Operation 1 and the condition that the data needs to meet.
Operation 3: Perform the data projection operation, and project the data that meets the condition and that is filtered out in Operation 2 to another data address range, where operation parameters required by the data projection operation are the data filtered out in Operation 2 and the another data address range.

For example, a composite operation 2 requiring sorting a plurality of pieces of data in a plurality of data address ranges may be split into a scanning operation, an addition operation, and a sorting operation.

An operation process of the composite operation 2 is as follows:
Operation 1: Perform the scanning operation, and separately scan a plurality of pieces of data in a plurality of data address ranges, where an operation parameter required by the scanning operation is the plurality of data address ranges.
Operation 2: Perform the addition operation, and summarize the plurality of pieces of data, in the data address ranges, read in Operation 1, where an operation parameter required by the addition operation is the plurality of pieces of data in the data address ranges.
Operation 3: Perform the sorting operation, and sort the plurality of pieces of data summarized in Operation 2, where an operation parameter required by the sorting operation is the plurality of pieces of data summarized in Operation 2.

The operation parameter required by the composite operation is an operation parameter required for performing the composite operation. Because the composite operation may be split into the plurality of basic operations, the operation parameter required by the composite operation is the operation parameters required by the plurality of basic operations obtained after the splitting, and the operation parameters required by the plurality of basic operations may be understood as operation parameters required by the foregoing operations.

It may be learned that, after the composite operation is split, the composite operation includes the plurality of basic operations sorted based on the performing sequence, and the operation parameter required by the composite operation includes the operation parameters required by the plurality of basic operations.

When performing the composite operation, the storage device only needs to perform the plurality of basic operations based on the performing sequence. When performing any one of the basic operations, the storage device may complete the basic operation by invoking an operator of the basic operation and an operation parameter required by the basic operation.

In embodiments of this application, the storage device may obtain operation rules of a plurality of composite operations, and correspondingly may also obtain operation parameters required by the plurality of composite operations.

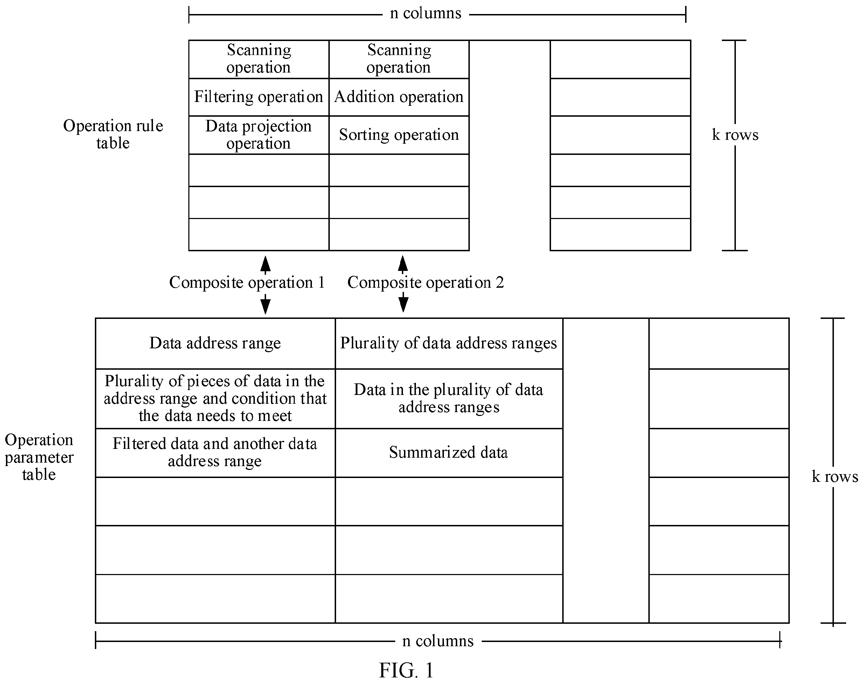

For ease of understanding, as shown in FIG. 1, the storage device may integrate the operation rules of the composite operations into a composite operation table with k rows and n columns. Each column represents an operation rule of one composite operation, and one row in each column represents one basic operation obtained after the composite operation is split.

Similarly, the operation parameters required by the composite operations may also be integrated into an operation parameter table with k rows and n columns. Each column represents an operation parameter required by one composite operation, and one row in each column represents an operation parameter required by one basic operation obtained after the composite operation is split.

There is a correspondence between a row and a column of the composite operation table and a row and a column of the operation parameter table. In FIG. 1, the composite operation table represents an example of the operation rule of the composite operation 1 and the operation rule of the composite operation 2. The operation parameter table represents an example of the operation parameter required by the composite operation 1 and the operation parameter required by the composite operation 2.

Actually, the basic operation may also be used as a "special composite operation" and is integrated with another composite operation to form a composite operation table. In this case, in the composite operation table, the operation rule of the basic operation occupies one column separately, and the column may include only the basic operation. Similarly, the operation parameter required by the basic operation may also be integrated with an operation parameter required by another composite operation, to form an operation parameter table. In this case, in the operation parameter table, the operation parameter required by the basic operation occupies one column separately.

The basic operation is used as a special composite operation. A manner in which a processing device indicates the storage device to perform the basic operation is similar to a manner in which the processing device indicates the storage device to perform the composite operation. In embodiments of this application, only an example in which the processing device indicates the storage device to perform the composite operation is used for description.

### (3) Hardware operator.

In embodiments of this application, a hardware logic for implementing a basic operation is referred to as a hardware operator of the basic operation. Hardware operators of different types of basic operations are different. Common hardware operators include but are not limited to a multiplier, an adder, and a comparator.

For any hardware operator of the basic operation, the hardware operator of the basic operation can implement a control logic of the basic operation (where the control logic may be understood as a data processing procedure in a basic operation process). Provided that the operation parameter required by the basic operation is written into the hardware operator of the basic operation, the hardware operator of the basic operation can process and operate the operation parameter based on the control logic, and finally complete the basic operation. The hardware operator of the basic operation may be built in the storage device, so that the storage device has a capability of implementing the basic operation.

The scanning operation is used as an example. For example, the scanning operation requires scanning a plurality of pieces of data from a data address A to a data address B. A control logic of a hardware operator of the scanning operation is as follows:
1. Data is read based on the data address, and the first time of execution starts from the data address A.
2. The data address increases by one.
3. It is determined whether the data address is greater than the data address B.
4. If the data address is greater than the data address B, execution stops. Otherwise, execution starts from 1.

When the scanning operation is performed, only the data address A and the data address B need to be provided for the hardware operator of the scanning operation, and the hardware operator of the scanning operation may obtain the plurality of pieces of data between the data address A and the data address B based on the foregoing control logic.

In embodiments of this application, the storage device receives an operation request from the processing device, and the operation request carries a computing task. The computing task indicates to perform the composite operation on target data. The storage device obtains the operation rule of the composite operation, where the operation rule of the composite operation indicates the plurality of basic operations required for implementing the composite operation and the performing sequence of the plurality of basic operations. The storage device invokes, based on the performing sequence of the plurality of basic operations, the hardware operators corresponding to the plurality of basic operations to perform the composite operation on the target data.

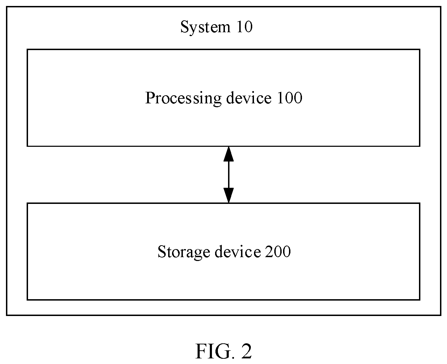

FIG. 2 is a schematic diagram of a structure of a data processing system according to an embodiment of this application. The data processing system 10 includes a processing device 100 and a storage device 200.

The processing device 100 is a most important computing core and management core in the data processing system. As the computing core, the processing device 100 can complete a main data computing operation. For example, the processing device 100 can implement audio and video data encoding and decoding, massive data clustering, big data analysis, and the like. As the management core, the processing device 100 can manage the storage device 200. For example, the processing device 100 can perform data reading/writing on the storage device 200, manage storage space in the storage device 200, and so on.

In this embodiment of this application, the processing device 100 can hand over some basic operations and composite operations to the storage device 200 for execution. The processing device 100 can send, to the storage device 200, an operation request (a first operation request and a second operation request that appear in the following) that carries a computing task. The computing task indicates to perform an operation on target data (where the operation may be a basic operation, or may be a composite operation). For the composite operation, the composite operation is more complex than the basic operation. To enable the storage device 200 to complete the composite operation, the processing device 100 may configure an operation rule of the composite operation for the storage device 200, and can further configure, for the storage device 200, an operation parameter required by the composite operation.

The processing device 100 may be a central processing unit (central processing unit, CPU), or may be another specific integrated circuit. Alternatively, the processing device 100 may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like.

The storage device 200 is a device that has a data storage function in the data processing system. When the processing device 100 performs data computing, the storage device 200 can provide, for the processing device 100, data required by the data computing. The storage device 200 can further store data obtained after the processing device 100 performs data computing.

In this embodiment of this application, the storage device 200 can cooperate with the processing device 100 to complete some data operations. A hardware operator used to implement a basic operation is disposed in the storage device 200, and the storage device 200 can directly implement the basic operation by using the basic hardware operator. The storage device 200 may further obtain the operation rule of the composite operation, and store the operation rule of the composite operation. The storage device 200 can invoke, based on an operation request sent by the processing device 100 and the operation rule of the composite operation, the hardware operator of the basic operation and the operation parameter required by the composite operation, to implement the composite operation.

A specific form of the storage device 200 is not limited in embodiments of this application, and all devices having a storage function are applicable to embodiments of this application. The storage device 200 may be memory, for example, a read-only memory (read-only memory, ROM), a dynamic random access memory (dynamic random access memory, DRAM), or a storage class memory (storage class memory, SCM) such as a static random access memory (static random access memory, SRAM), or a dual in-line memory module or a dual-line memory module (dual in-line memory module, DIMM). Alternatively, the storage device 200 may be a solid-state drive (solid-state drive, SSD).

In the data processing system, the storage device 200 and the processing device 100 may be deployed in a plurality of manners. The storage device 200 and the processing device 100 may be located inside a same apparatus, and are connected through a system bus. For example, the processing device 100 may be a processor such as a CPU, a GPU, or a DPU. The storage device 200 may be memory connected to the processor through the system bus (for example, a data bus, a control bus, and an address bus). The storage device 200 may alternatively be an SSD connected to the processing device 100 through a bus such as a peripheral component interconnect express (peripheral component interconnect express, PCIe).

Alternatively, the storage device 200 and the processing device 100 may be respectively located in different apparatuses, and are connected through a network. For example, the processing device 100 may be deployed on a user side, the storage device 200 is deployed on a cloud, and the processing device 100 establishes a connection to the storage device 200 through a network.

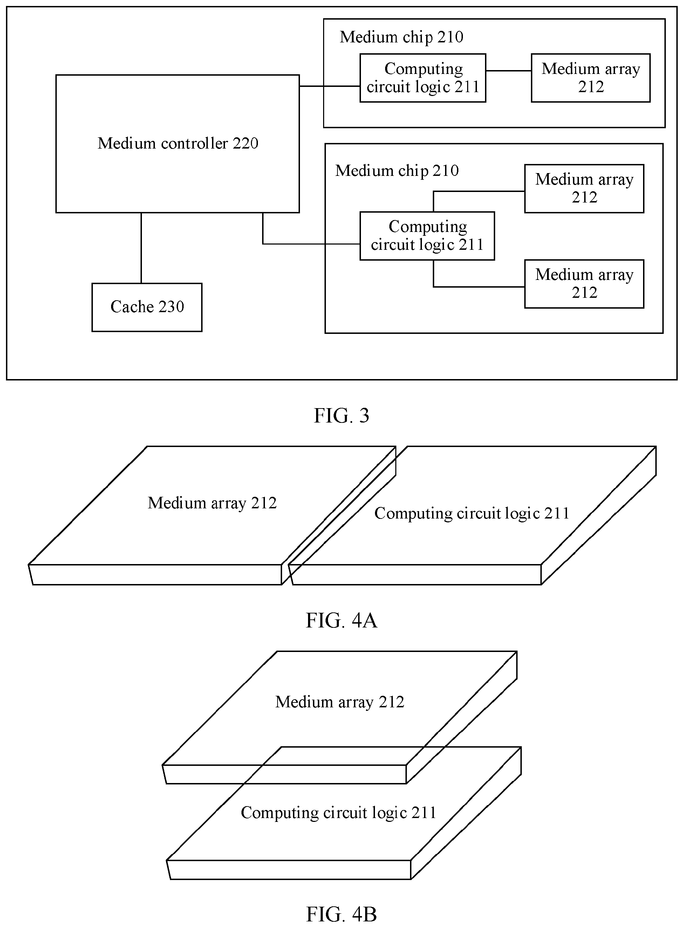

The following describes a structure of the storage device 200 provided in embodiments of this application with reference to FIG. 3. As shown in FIG. 3, the storage device 200 includes a medium chip 210 and a medium controller 220. The medium chip 210 includes a computing circuit logic 211 and a medium array 212. Optionally, the storage device 200 further includes a cache 230. The cache 230 is configured to temporarily store data. For example, the cache 230 may store data fed back by each computing circuit logic 211 to the medium controller 220, or the cache 230 needs to subsequently store data in the medium array 212.

The medium chip 210 includes one or more medium arrays 212, and the medium array 212 is configured to store data. A type of the medium chip is not limited in embodiments of this application. For example, the storage device 200 is memory. The medium chip may be a memory chip, and the memory chip may include one or more medium arrays 212. For example, the storage device 200 is an SSD. The medium chip 210 may be a flash memory chip, and the memory chip may include one or more medium arrays 212.

In the storage device 200, one corresponding computing circuit logic 211 is disposed for each medium array 212. A correspondence between the medium array 212 and the computing circuit logic 211 may be a one-to-one correspondence. In other words, one medium array 212 corresponds to one computing circuit logic 211, and different medium arrays 212 correspond to different computing circuit logics 211. A correspondence between the medium arrays 212 and the computing circuit logic 211 may be a many-to-one correspondence. The plurality of medium arrays 212 correspond to one computing circuit logic 211, and different medium arrays 212 may correspond to a same computing circuit logic 211.

The computing circuit logic 211 can perform data reading/writing on the corresponding medium array 212. In embodiments of this application, the computing circuit logic 211 further has a data computing function. The computing circuit logic 211 can perform an operation on data to be written into the medium array 212, or can perform an operation on data stored in the medium array 212.

The computing circuit logic 211 includes a hardware operator of one or more basic operations. For the basic operation, the computing circuit logic 211 may implement the basic operation by using the hardware operator of the basic operation. For example, the computing circuit logic 211 may implement a scanning operation by using a hardware operator of the scanning operation; the computing circuit logic 211 implements a filtering operation by using a hardware operator of the filtering operation; and the computing circuit logic 211 implements a sorting operation by using a hardware operator of the sorting operation.

The computing circuit logic 211 may further obtain an operation rule of the composite operation and an operation parameter required by the composite operation, and store the operation rule of the composite operation and the operation parameter required by the composite operation. The operation rule of the composite operation may be preconfigured by the medium controller 220 in the storage device 200 at a request of the processing device 100, or may be configured by requesting the storage device 200 by the processing device 100 when the storage device 200 needs to perform the composite operation. The operation parameter required by the composite operation is configured by requesting the storage device 200 by the processing device 100 when the storage device 200 needs to perform the composite operation.

For the composite operation, the computing circuit logic 211 may implement the composite operation by using the hardware operator of the basic operation, the operation rule of the composite operation, and the operation parameter required by the composite operation.

In embodiments of this application, the computing circuit logic 211 may receive an operation instruction sent by the medium controller 220, and perform reading/writing or an operation on data in the medium array 212 based on the operation instruction.

In addition, in a possible implementation, in the storage device 200, a computing circuit may be disposed for the plurality of medium chips 210. The computing circuit may be disposed on a periphery of the medium chips 210. A function that can be implemented by the computing circuit is similar to a function that can be implemented by the foregoing computing circuit logic 211. A difference lies in that the computing circuit performs data reading/writing and a data operation on the plurality of medium chips 210.

The medium controller 220 is a control core of the storage device 200, and is responsible for some complex tasks, for example, managing data storage (for example, allocating storage space to to-be-written data; and for another example, determining a medium array 212 in which to-be-read data is located), and maintaining performance and a service life of the storage device 200 (for example, reclaiming data in the medium array 212 in a timely manner).

In embodiments of this application, the medium controller 220 can configure, at a request of the processing device 100, the operation rule of the composite operation and the operation parameter required by the composite operation. The medium controller 220 can further receive operation requests from a device (for example, the processing device 100 in FIG. 1) other than the storage device 200, and process the operation requests.

The operation requests received by the medium controller 220 may be classified into two types. One type is an operation request that only needs to perform data reading/writing, namely, a data read/write request. For example, the operation request carries a logical address of to-be-read data, and is used to request to read the data from the storage device 200, and then the operation request is the data read request. For another example, the operation request carries a logical address of to-be-written data, and is used to request to write the data into the storage device 200, and then the operation request is the data write request. The operation request does not require data computing.

For the operation request that carries the logical address of the to-be-read data, in a process of processing the operation request by the medium controller 220, the medium controller 220 may determine, based on the logical address of the to-be-read data carried in the operation request, a physical address of the to-be-read data and a medium array 212 in which the to-be-read data is located, and send an operation instruction to the computing circuit logic 211 corresponding to the medium array 212, where the operation instruction carries the physical address of the to-be-read data, and indicates to read the to-be-read data.

For the operation request that carries the logical address of the to-be-written data, in a process of processing the operation request by the medium controller 220, the medium controller 220 may determine, based on the logical address of the to-be-written data carried in the operation request, a physical address of the to-be-written data and a medium array 212 in which the to-be-written data is located, and send an operation instruction to the computing circuit logic 211 corresponding to the medium array 212, where the operation instruction carries the physical address of the to-be-written data, and indicates to store the to-be-written data at the physical address.

The other type is an operation request (a first operation request and a second operation request in the following) that carries a computing task. This type of operation request may request to perform the composite operation on the to-be-written data, and this type of operation request carries a virtual address of the composite operation. There is an association between the virtual address of the composite operation, a physical address of the operation rule of the composite operation, and a physical address of the operation parameter required by the composite operation.

For the operation request, of the storage device 200, that carries the computing task, in a process of processing the operation request by the medium controller 220, the medium controller 220 sends the operation instruction to the computing circuit logic 211, where the operation instruction carries the physical address of the operation rule of the composite operation and the physical address of the operation parameter required by the composite operation, and indicates the computing circuit logic 211 to perform the composite operation on the data.

Inside the storage device 200, there are many deployment manners of the medium array 212 and the computing circuit logic 211. The following lists two possible deployment manners.

Manner 1: The medium array 212 and the computing circuit logic 211 are located on a same plane.

As shown in FIG. 4A, the storage device 200 includes a plurality of medium arrays 212 and computing circuit logics 211 corresponding to the plurality of medium arrays 212. The medium arrays 212 and the computing circuit logics 211 are located on a same plane.

For the storage device 200 in this deployment manner, a deployment manner of the medium arrays 212 and the computing circuit logics 211 is simple, so that a generation process of the storage device 200 can be simplified, a production yield rate of the storage device 200 can be improved, and production costs of the storage device 200 can be controlled to some extent.

Manner 2: The medium array 212 and the computing circuit logic 211 are stacked.

As shown in FIG. 4B, the storage device 200 includes a plurality of medium arrays 212 and computing circuit logics 211 corresponding to the plurality of medium arrays 212. The medium arrays 212 and the computing circuit logics 211 corresponding to the medium arrays 212 are disposed in the storage device 200 in a stacked manner, and the medium arrays 212 and the computing circuit logics 211 corresponding to the medium arrays 212 are located on different planes.

For the storage device 200 in this deployment manner, the medium arrays 212 and the computing circuit logics 211 are stacked together, so that an area of the entire storage device 200 can be effectively reduced, and a quantity of medium arrays 212 can be effectively ensured, that is, storage space of the storage device 200 can be ensured. In addition, the computing circuit logics 211 are decoupled from the medium arrays 212, so that the computing circuit logics 211 are no longer attached to the medium arrays 212, and the computing circuit logics 211 can be constructed based on a more complex and refined circuit, to ensure operation efficiency of the computing circuit logics 211.

A difference from a common storage device 200 is that, in embodiments of this application, the storage device 200 can implement the composite operation by using the internal hardware operator of the basic operation and the stored operation rule of the composite operation. In this way, an operation that can be implemented by the storage device 200 is no longer limited by an internal hardware structure. Any composite operation may be split into a plurality of basic operations by using only a preset operation rule of the composite operation, and then the composite operation may be implemented by using hardware operators of the basic operations, to effectively extend a type of the operation that can be implemented by the storage device 200.

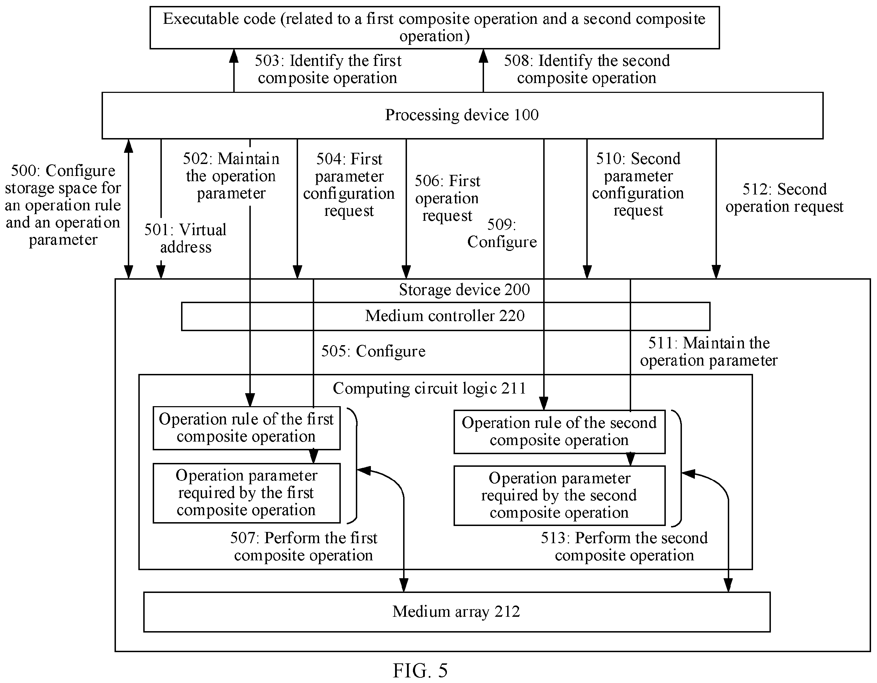

FIG. 5 shows a data operation method according to an embodiment of this application. The method may include the following steps.

Step 500: A storage device 200 preconfigures storage space for an operation rule of a composite operation and an operation parameter required by the composite operation. In step 500, the storage device 200 reserves a segment of storage space for the operation rule of the composite operation and the operation parameter required by the composite operation that are subsequently configured by a processing device 100, so that the operation rule of the composite operation and the operation parameter required by the composite operation that are subsequently configured by the processing device 100 can be stored in the reserved storage space.

From perspectives of a composite operation table and an operation parameter table, a function of performing step 500 is to configure storage locations of the composite operation table and the operation parameter table, and a storage location of each column of data in the composite operation table and a storage location of each column of data in the operation parameter table for the storage device 200. A storage location of one column of data in the composite operation table is a location indicated by a logical address or a physical address of an operation rule of one composite operation, and a storage location of one column of data in the operation parameter table is a location indicated by a logical address or a physical address of an operation parameter required by one composite operation.

The storage space preconfigured by the storage device 200 for the operation rule of the composite operation and the operation parameter required by the composite operation may be storage space in a medium array 212, or may be internal storage space of a computing circuit logic 211.

An operation of reserving, by the storage device 200, a segment of storage space for the operation rule of the composite operation and the operation parameter required by the composite operation may be triggered by the processing device 100, or may be performed by the storage device 200.

Manner 1: The processing device 100 actively performs triggering.

The processing device 100 may send a space allocation request to the storage device 200, where the space allocation request indicates the storage space preconfigured by the storage device 200 for the operation rule of the composite operation and the operation parameter required by the composite operation, and the space allocation request may further carry a logical address preconfigured by the processing device 100 for the operation rule of the composite operation and a logical address preconfigured for the operation parameter required by the composite operation.

After the storage device 200 receives the space allocation request, the storage device 200 allocates physical addresses to the operation rule of the composite operation and the operation parameter required by the composite operation, and establishes a correspondence between the logical address and the physical address of the operation rule of the composite operation and a correspondence between the logical address and the physical address of the operation parameter required by the composite operation that are carried in the space allocation request.

Specifically, inside the storage device 200, after receiving the space allocation request, a medium controller 220 establishes, for each computing circuit logic 211, the correspondence between the logical address of the operation rule of the composite operation and the physical address of the operation rule of the composite operation and the correspondence between the logical address and the physical address of the operation parameter required by the composite operation. The medium controller 220 sends a space allocation indication to each computing circuit logic 211, where the space allocation indication is used to request the computing circuit logic 211 to allocate the storage space to the operation rule of the composite operation and the operation parameter required by the composite operation, and the space allocation indication carries the physical address of the operation rule of the composite operation and the physical address of the operation parameter required by the composite operation. After receiving the space allocation indication, the computing circuit logic 211 reserves a storage location indicated by the physical address of the operation rule of the composite operation, so that the operation rule of the composite operation is subsequently written into the physical address, and reserves a storage location indicated by the physical address of the operation parameter required by the composite operation, so that the operation parameter required by the composite operation is subsequently written into the physical address.

The processing device 100 may subsequently configure, in the storage device 200, operation rules of a plurality of composite operations and operation parameters required by the composite operations. Therefore, the processing device 100 may allocate, in the storage device 200 by using the space allocation request, storage space to the operation rules of the plurality of composite operations and the operation parameters required by the composite operations.

Manner 2: The storage device 200 independently performs configuration.

The storage device 200 may internally reserve the storage space for the operation rule of the composite operation and the operation parameter required by the composite operation. The storage device 200 has also pre-established a correspondence between a logical address and a physical address of the operation rule of the composite operation and a correspondence between a logical address and a physical address of the operation parameter required by the composite operation. After the storage device 200 is connected to the processing device 100 for the first time, the processing device 100 may read, from the storage device 200, the logical addresses of the operation rule of the composite operation and the operation parameter required by the composite operation.

It should be noted that, if the processing device 100 is connected to a plurality of storage devices 200, logical addresses configured in each storage device 200 for the operation rule of the composite operation and the operation parameter required by the composite operation are the same. To distinguish between different storage devices 200, after reading, from the plurality of storage devices 200, the logical addresses of the operation rule of the composite operation and the operation parameter required by the composite operation, the processing device 100 further processes the read logical addresses (for example, adds identification information indicating the storage device 200 to the logical addresses, where the identification information has been learned of by the storage device 200), and generates finally available logical addresses of the operation rule of the composite operation and the operation parameter required by the composite operation of each storage device 200. In this way, the logical address of the operation rule of the composite operation of each storage device 200 is different, and the logical address of the operation parameter required by the composite operation of each storage device 200 is also different.

When an operation rule of a composite operation or an operation parameter required by the composite operation needs to be configured in a storage device 200A subsequently, the processing device 100 only needs to send a configuration request that carries a logical address (where the logical address is a processed logical address) of the operation rule of the composite operation or the operation parameter required by the composite operation of the storage device 200A, and each storage device 200 can receive the configuration request. However, only the storage device 200A can parse the configuration request (for example, can identify identification information, of the storage device 200A, that is carried in the logical address), and process the configuration request.

The storage device 200 reserves the storage space for the operation rule of the composite operation and the required operation parameter. The processing device 100 may configure the operation rule of the composite operation in the storage device 200, so that the operation rule of the composite operation is written into the storage space.

Step 501: The processing device 100 configures a virtual address of the composite operation for the storage device 200. A difference from the physical address and the virtual address of the composite operation is that the virtual address of the composite operation does not indicate the storage location of the operation rule of the composite operation, and the virtual address of the composite operation may be understood as an indicator for performing the composite operation.

A manner for performing step 501 by the processing device 100 is not limited in this embodiment of this application. Any manner in which the virtual address of the composite operation can be configured is applicable to this embodiment of this application. For example, the processing device 100 sends a virtual address configuration request to the storage device 200, where the virtual address configuration request carries the virtual address of the composite operation and the logical address of the operation rule of the composite operation, and the virtual address configuration request is used to request to configure the virtual address for the composite operation. After receiving the virtual address configuration request, the storage device 200 establishes an association between the virtual address of the composite operation and the storage locations of the operation rule and the operation parameter of the composite operation, for example, establishes an association between the virtual address of the composite operation and logical locations of the operation rule and the operation parameter of the composite operation, or establishes an association between the virtual address of the composite operation and physical locations of the operation rule and the operation parameter of the composite operation. Specifically, inside the storage device 200, after receiving the virtual address configuration request, the medium controller 220 establishes the association between the virtual address of the composite operation and the storage locations of the operation rule and the operation parameter of the composite operation.

For another example, the processing device 100 and the storage device 200 may pre-agree that a virtual address configuration manner is obtaining the virtual address of the composite operation after hash processing is performed on the logical address of the operation rule of the composite operation. After the storage device 200 performs step 501, both the storage device 200 and the processing device 100 can determine the logical address of the operation rule of the composite operation and the logical address of the operation parameter required by the composite operation. After determining the logical address of the operation rule of the composite operation, the storage device 200 performs hash processing on the logical address of the operation rule of the composite operation, to obtain the virtual address of the composite operation, and establishes the association between the virtual address of the composite operation and the storage locations of the operation rule and the operation parameter of the composite operation. After determining the logical address of the operation rule of the composite operation, the processing device 100 performs hash processing on the logical address of the operation rule of the composite operation, to obtain the virtual address of the composite operation, and establishes the association between the virtual address of the composite operation and the storage locations of the operation rule and the operation parameter of the composite operation.

In this embodiment of this application, when the storage space has been reserved for the operation rule of the composite operation and the operation parameter required by the composite operation, the processing device 100 may configure the virtual address for the composite operation even if the operation rule of the composite operation and the operation parameter required by the composite operation are not written into the storage space. For example, in the foregoing descriptions, after the storage device 200 performs step 500, the processing device 100 may perform step 501. Certainly, after the operation rule of the composite operation and the operation parameter required by the composite operation are written into the storage space, the processing device 100 may alternatively perform step 501. An occasion for performing step 501 by the processing device 100 is not limited in this embodiment of this application. Herein, only an example in which the processing device 100 performs step 501 before writing the operation rule of the composite operation and the operation parameter required by the composite operation into the storage space is used for description.

This embodiment of this application provides two different configuration manners of the operation rule of the composite operation. One manner is preconfiguration. For details, refer to step 502. In this manner, the processing device 100 may configure, in the storage device 200 in advance, some operation rules that are of the composite operation and that may be used. The other manner is real-time configuration. For details, refer to step 509. In this manner, the processing device 100 can configure the operation rule of the composite operation in the storage device 200 in real time. To distinguish between the composite operations for which the operation rules are configured in the two manners, in the former manner, the composite operation for which the operation rule is configured is a first composite operation; and in the latter manner, the composite operation for which the operation rule is configured is a second composite operation. The following sequentially describes the two configuration manners.

Step 502: The processing device 100 configures an operation rule of the first composite operation in the storage device 200.

The processing device 100 sends a first rule configuration request to the storage device 200, where the first rule configuration request carries the operation rule of the first composite operation and a logical address of the operation rule of the first composite operation.

After receiving the first rule configuration request, the storage device 200 writes the operation rule of the first composite operation into a physical address corresponding to the logical address.

Specifically, inside the storage device 200, after receiving the first rule configuration request, the medium controller 220 may send a rule configuration indication to each computing circuit logic 211, where the rule configuration indication carries the operation rule of the first composite operation and the physical address of the operation rule of the first composite operation. After receiving the rule configuration indication, the computing circuit logic 211 writes the operation rule of the first composite operation into the physical address.

For example, the processing device 100 sends the first rule configuration request to the storage device 200, where the first rule configuration request carries an operation rule of a composite operation 1 and a logical address of the operation rule of the composite operation 1. After receiving the first rule configuration request, the storage device 200 stores the operation rule of the scanning operation at the logical address of the operation rule of the scanning operation.

Herein, an example in which the storage device 200 preconfigures storage space for operation rules of five composite operations and operation parameters required by the composite operations in step 500 is used. When performing step 502, the processing device 100 may write the operation rules of the composite operations into all the storage space reserved in step 500, that is, the processing device 100 may write operation rules of five first composite operations into the storage device 200 in step 502. When performing step 502, the processing device 100 may alternatively occupy only a part of the storage space reserved in step 500 to write the operation rules of the first composite operations. For example, the processing device 100 may write, in step 501, operation rules of three first composite operations into the storage device 200, and storage space of operation rules of two composite operations in the storage space is not occupied.

Step 502 is a process of preconfiguring the operation rule of the first composite operation. In the preconfiguration process, the processing device 100 can configure, in the storage device 200 in advance, some operation rules that are of the first composite operations and that may be performed by the storage device 200.

Step 503: The processing device 100 identifies the first composite operation that can be performed by the storage device 200.

An application program, for example, an application program or a compiler that can parse executable code, may be run on the processing device 100. In this way, the processing device 100 has a function of analyzing the executable code or source code. The processing device 100 may analyze the executable code that needs to be subsequently executed or the source code of the executable code that needs to be subsequently executed before compilation, and determine the composite operation that can be performed by the storage device 200 and that is in the executable code or the source code. For example, the processing device 100 may analyze a composite operation 1, a composite operation 2, and the like in the executable code or the source code.

For another example, in a process of writing executable code or source code, the composite operation that can be performed by the storage device 200 may be identified. In other words, a composite operation identifier is added to the executable code or the source code for the composite operation that can be performed by the storage device 200. Provided that the processing device 100 identifies the composite operation identifier in the executable code or the source code, an operation identified by the composite operation identifier is the composite operation that can be performed by the storage device 200.

For another example, in a process of writing executable code or source code, the composite operation that can be performed by the storage device 200 may be performed in a manner of an application programming interface (application programming interface, API) call. In other words, the composite operation performed by the storage device 200 is written into the executable code or the source code in a form of an API. Provided that the processing device 100 identifies the API call in the executable code or the source code, the API called by the API call is the composite operation that can be performed by the storage device 200. These APIs can be obtained by the processing device 100 or have been prestored, for example, stored in a cache inside the processing device 100.

For another example, in a process of writing executable code or source code, the composite operation performed by the storage device 200 is defined as a new function, and the composite operation performed by the storage device 200 is represented in a manner of a new function call. Provided that the processing device 100 identifies the new function call in the executable code or the source code, the processing device 100 may determine that the new function is the composite operation that can be performed by the storage device 200. The new function can be obtained by the processing device 100 or has been prestored, for example, stored in a cache inside the processing device 100.

In the foregoing descriptions, the compiler having a function of parsing the source code is mentioned. The compiler can compile the source code into the executable code. If the compiler identifies the composite operation that can be performed by the storage device 200 in the source code, a corresponding identifier (where the identifier has a function similar to that of the composite operation identifier in the foregoing descriptions) may be added to the composite operation in a process of compiling the source code into executable code, so that in a process of executing the executable code, the processing device 100 subsequently determines, by using the corresponding identifier, the composite operation that can be performed by the storage device 200.

In the process of executing the executable code, if the processing device 100 identifies that the composite operation that can be performed by the storage device 200 is a first composite operation for which an operation rule has been preconfigured, the processing device 100 may indicate the storage device 200 to perform the first composite operation, and performing of the first composite operation requires some operation parameters. In this case, the processing device 100 may perform step 504.

Step 504: The processing device 100 sends a first parameter configuration request to the storage device 200, where the first parameter configuration request is used to request the storage device 200 to configure an operation parameter required by the first composite operation, and the first parameter configuration request carries the operation parameter required by the first composite operation and a logical address of the operation parameter required by the first composite operation.

In a process in which the processing device 100 executes the executable code, if one first composite operation is identified, the processing device 100 determines, based on code that appears in the executable code and that is of the first composite operation, an operation parameter required by the first composite operation. For example, in the process of executing the executable code, the processing device 100 identifies a composite operation 1. The composite operation 1 requires data that is in a plurality of pieces of data between a data address A and a data address B and that is equal to a target value to be projected to a data address C and a data address D. Therefore, the processing device 100 may determine that an operation parameter required by the composite operation 1 includes the data address A and the data address B (namely, an operation parameter required by a scanning operation in the composite operation 1); further includes data scanned by the scanning operation and the target value (namely, an operation parameter required by a filtering operation in the composite operation 1, where the data scanned by the scanning operation may be identified as an output value of the scanning operation); and further includes data filtered out by the filtering operation, the data address C, and the data address D (namely, an operation parameter required by a data projection operation in the composite operation 1, where the data filtered out by the filtering operation may be identified as an output value of the filtering operation).

The processing device 100 may send the first parameter configuration request to the storage device 200, where the first parameter configuration request carries the operation parameter required by the scanning operation and a logical address of the operation parameter required by the scanning operation.

Step 505: The storage device 200 receives the first parameter configuration request, and stores, based on the logical address of the operation rule of the first composite operation, the operation parameter required by the first composite operation.

For example, the first parameter configuration request carries the operation parameter required by the composite operation 1 and the logical address of the operation rule of the composite operation 1. After receiving the first parameter configuration request, the storage device 200 determines, based on the logical address of the operation rule of the composite operation 1, a physical address of the operation parameter required by the composite operation 1, and writes the operation parameter required by the composite operation 1 into the physical address.

The first parameter configuration request may be essentially understood as an operation request for requesting to write data. The operation request carries the logical address (for example, the logical address of the operation rule of the first composite operation) and data that needs to be written (for example, the operation parameter required by the first composite operation).

The first parameter configuration request may use a format of an existing operation request for requesting to write data. In some scenarios, to determine that the data to be written by using the first parameter configuration request is the operation parameter required by the first composite operation, the first parameter configuration request may carry a pre-agreed parameter configuration identifier, and the parameter configuration identifier represents that the first parameter configuration request is an operation request for configuring the operation parameter required by the first composite operation.

Inside the storage device 200, after receiving the first parameter configuration request, the medium controller 220 may send a parameter configuration indication to each computing circuit logic 211, where the parameter configuration indication indicates that the operation parameter required by the first composite operation is stored, and the parameter configuration indication carries the operation parameter required by the first composite operation and the physical address of the operation rule of the first composite operation. After receiving the parameter configuration indication, the computing circuit logic 211 writes, at the physical address, the operation parameter required by the first composite operation.

For the data address included in the operation parameter required by the composite operation, a logical address of the data or a physical address of the data is not particularly distinguished in this embodiment of this application. However, it should be understood that, the data address exchanged between the processing device 100 and the storage device 200 is usually the logical address of the data. For example, the data address carried in the first parameter configuration request is the logical address of the data. The data address exchanged inside the storage device 200 is usually the physical address of the data. For example, the data address carried in the parameter configuration indication is the physical address of the data. In other words, after obtaining the logical address of the data from the processing device 100, the storage device 200 may translate the logical address of the data into the physical address of the data. In this way, the storage device 200 may perform data reading/writing on the physical address.

In some scenarios, data on which the first composite operation needs to be performed is distributed only in a part of medium arrays 212. For example, in the foregoing composite operation 1, data between the data address A and the data address B is distributed in the part of medium arrays 212, and the medium controller 220 may send the parameter configuration indication only to the computing circuit logic 211 corresponding to the part of medium arrays 212. The data address carried in the parameter configuration indication received by any computing circuit logic 211 is the data address in the medium array 212 corresponding to the computing circuit logic 211.

In other words, inside the storage device 200, when the medium controller 220 receives the first parameter configuration request including the data address, the medium controller 220 parses the data address, determines the medium array 212 in which the data address is distributed, and then sends the parameter configuration indication to the computing circuit logic 211, where the data address carried in the parameter configuration indication is the data address in the medium array 212.

The composite operation 1 is used as an example. When receiving the first parameter configuration request that includes the operation parameter required by the composite operation 1, the medium controller 220 parses the data address A and the data address B, and determines a medium array 212 in which a plurality pieces of data between the data address A and the data address B are distributed. It is assumed that the plurality of pieces of data between the data address A and the data address B are distributed in a medium array 212M and a medium array 212N, where the medium array 212M includes data between the data address A and a data address V, and the medium array 212M includes data between the data address V and the data address B. The medium controller 220 sends a parameter configuration indication to the computing circuit logic 211 corresponding to the medium array 212M, where data addresses carried in the parameter configuration indication are the data address A to the data address V; and sends the parameter configuration indication to the computing circuit logic 211 corresponding to the medium array 212N, where data addresses carried in the parameter configuration indication are the data address V to the data address B.

Herein, when the data addresses included in the operation parameter required by the composite operation are data addresses (for example, a data address C and a data address D) to which data needs to be projected or written, a transmission manner of the operation parameter required by the composite operation inside the storage device 200 is not specially emphasized, because the data addresses to which the data sent by the processing device 100 needs to be projected or written is the logical address of the data, and the storage device 200 only needs to write the data into a storage location in the medium array 212, and establishes a correspondence between a physical address of the storage location and the logical address. Therefore, for the data addresses to which the data needs to be projected or written, a medium control unit may allocate the storage location of the data based on an occupation status of storage space in each medium array 212. The data addresses to which the data needs to be projected or written may be distributed in different medium arrays 212, or may be distributed in a same medium array 212. However, when the data needs to be projected from one medium array 212 to another medium array 212, the medium controller 220 may first indicate a computing circuit logic 211 corresponding to one medium array 212 to read the data, temporarily cache the data in a cache 230 inside the storage device 200, then send the data from the cache 230 to a computing circuit logic 211 corresponding to the another medium array 212, and notify a physical address of the data. The computing circuit logic 211 stores the data in the another medium array 212 based on the physical address.

After step 504 and step 505, the processing device 100 configures, in the storage device 200, the operation parameter required by the first composite operation, and then the processing device 100 may indicate the storage device 200 to perform the first composite operation.

Step 506: The processing device 100 sends a first operation request to the storage device 200, where the first operation request is used to request to perform the first composite operation on first data in the storage device 200. In other words, the first operation request is an operation request that carries a computing task. The first operation request may carry a virtual address of the first composite operation. The virtual address that is of the first composite operation and that is carried in the first operation request essentially indicates that the first operation request is the operation request that carries the computing task, and the virtual address of the first composite operation represents the first composite operation that needs to be performed on the first data.

The virtual address of the first composite operation is associated with the operation rule of the first composite operation and the physical address of the required operation parameter.

Herein, a relationship between the virtual address of the first composite operation, the physical addresses of the operation rule of the first composite operation and the required operation parameter, and logical addresses of the operation rule of the first composite operation and the required operation parameter is described.

Both the logical address of the operation rule of the first composite operation and the physical address of the operation rule of the first composite operation indicate a storage location of the operation rule of the first composite operation. The logical address is an address used for interaction between the processing device 100 and the storage device 200, and the physical address is used inside the storage device 200. The logical address of the operation parameter required by the first composite operation is similar to the physical address of the operation parameter required by the first composite operation.

The virtual address of the first composite operation is an indicator for performing the first composite operation. When receiving an operation request that carries the virtual address of the first composite operation, the storage device 200 may determine that the operation request is an operation request that carries a computing task. To enable the storage device 200 to perform the first composite operation after obtaining the virtual address of the first composite operation, the storage device 200 needs to associate the virtual address of the first composite operation with the physical address of the operation rule of the first composite operation and the physical address of the operation parameter required by the first composite operation. In this way, the storage device 200 can determine, based on the virtual address of the first composite operation, the operation rule of the first composite operation and the operation parameter required by the first composite operation, to perform the first composite operation.

Step 507: The storage device 200 receives the first operation request, and performs the first composite operation on the first data based on the first operation request.

The first operation request may use a format of an existing operation request for requesting data reading/writing. In other words, the first operation request may continue to use the format of the existing data reading/writing request, and a process of exchanging the operation request that carries the computing task between the processing device 100 and the storage device 200 is still the same as the exchanging process of the existing data reading/writing request. Certainly, in some scenarios, to determine that the first operation request is the operation request that carries the computing task, the first operation request may carry a pre-agreed operation identifier, and the operation identifier represents that the first operation request is the operation request that carries the computing task.

For the storage device 200, because the first operation request carries the virtual address of the first composite operation, the storage device 200 can determine, based on the virtual address of the first composite operation, that the first operation request is the operation request that carries the computing task. The storage device 200 may determine, based on the virtual address of the first composite operation, the physical address of the operation rule of the first composite operation and the physical address of the operation parameter required by the first composite operation, to determine the operation rule of the first composite operation and the operation parameter required by the first composite operation. The storage device 200 sequentially invokes, based on a plurality of basic operations indicated by the operation rule of the first composite operation and a performing sequence of the plurality of basic operations, hardware operators of the plurality of basic operations and operation parameters that are required by the plurality of basic operations and that are in the operation parameter required by the first composite operation, to complete the first composite operation.

For example, the logical address that is of the operation rule of the first composite operation and that is carried in the first operation request is the virtual address of the operation rule of the composite operation 1. After receiving the first operation request, the storage device 200 determines, based on the virtual address of the composite operation 1, the operation rule of the composite operation 1 and the operation parameter required by the composite operation 1 (where the operation parameter is configured by the processing device 100 in step 506 and step 507 for the storage device 200).

The storage device 200 may first perform the scanning operation to scan the plurality of pieces of data between the data address A and the data address B, then perform the filtering operation to find data equal to the target value from the plurality of pieces of scanned data, and then perform the data projection operation to write the data filtered out by the filtering operation into the data address C and the data address D.

Inside the storage device 200, after the medium controller 220 receives the first operation request, if the plurality of pieces of data between the data address A and the data address B are distributed in different computing circuit logics 211, the medium controller 220 may send a first operation indication to the different computing circuit logics 211, where the first operation indication carries the physical address of the operation rule of the first composite operation and the physical address of the operation parameter required by the first composite operation. The computing circuit logic 211 determines, based on the first operation indication, the operation rule of the composite operation 1 and the operation parameter required by the composite operation 1.

For any computing circuit logic 211, the computing circuit logic 211 may invoke the operation parameter required by the composite operation 1 to sequentially perform the scanning operation, the filtering operation, and the data projection operation for data in the corresponding medium array 212. Because the medium array 212 corresponding to the computing circuit logic 211 may store only a part of data between the data address A and the data address B, the computing circuit logic 211 scans, filters, and projects only the part of data.

After steps 506 and 507, the processing device 100 indicates the storage device 200 to complete the preconfigured first composite operation. However, in some scenarios, in the process of executing the executable code, the processing device 100 identifies some second composite operations for which no operation rule is configured in advance. In this case, the processing device 100 may configure, in the storage device 200, operation rules of the second composite operations that are not preconfigured. This operation rule configuration manner of the composite operation is more real-time, and the operation rule of the composite operation can be configured in a timely manner based on a type or specific semantics of the executable code that needs to be executed by the processing device 100.

Step 508: In the process of executing the executable code, the processing device 100 identifies a second composite operation that is not configured in the storage device 200.

Step 509: The processing device 100 configures an operation rule of the second composite operation in the storage device 200. A manner in which the processing device 100 performs step 508 is similar to a manner in which the processing device 100 performs step 502. A difference is that in step 502, the processing device 100 configures the operation rule of the second composite operation in advance before executing the executable code. In step 509, the operation rule of the second composite operation is configured in the process in which the processing device 100 executes the executable code.

Herein, an example in which the processing device 100 configures an operation rule of a composite operation 2 in the storage device 200 is used for description. The processing device 100 sends a second rule configuration request to the storage device 200, where the second rule configuration request carries the operation rule of the composite operation 2 and a logical address of the operation rule of the composite operation 2. The operation rule of the composite operation 2 indicates that the composite operation 2 needs to sequentially perform the scanning operation and a sorting operation. After receiving the second rule configuration request, the storage device 200 stores an operation rule of the filtering operation at the logical address of the operation rule of the composite operation 2.

Step 510: The processing device 100 sends a second parameter configuration request to the storage device 200, where the second parameter configuration request is used to request the storage device 200 to configure an operation parameter required by the second composite operation, and the second parameter configuration request carries the operation parameter required by the second composite operation and a logical address of the operation parameter required by the second composite operation.

For example, the second composite operation is the composite operation 2. If the composite operation 2 in the executable code requires sorting a plurality of pieces of data in a data address range P and a data address range Q, the processing device 100 may determine that the operation parameter required by the composite operation 2 includes the data address range P and the data address range Q (namely, an operation parameter required by the scanning operation); further includes data in the data address range P and data in the data address range Q (namely, an operation parameter required by an addition operation); and further includes data after data summarization in the data address range P and the data address range Q (namely, an operation parameter required by the sorting operation).

Step 511: The storage device 200 receives the second parameter configuration request, and stores, based on the logical address of the operation parameter required by the second composite operation, the operation parameter required by the second composite operation.

An execution manner of step 510 and step 511 is similar to an execution manner of step 504 and step 505. For details, refer to the foregoing content. Details are not described herein again.

After step 508 to step 511, the processing device 100 configures, in the storage device 200 in a timely manner, the operation parameter required by the second composite operation, and then the processing device 100 may indicate the storage device 200 to perform the second composite operation. The following uses an example in which the second composite operation is performed on to-be-read second data for description.

Step 512: The processing device 100 sends a second operation request to the storage device 200, where the second operation request is used to request to read the second data after the second composite operation is performed on the second data. In other words, the second operation request is an operation request that carries a computing task. The second operation request carries a virtual address of the second composite operation. The virtual address that is of the second composite operation and that is carried in the second operation request essentially indicates that the second operation request is an operation request that carries a computing task, and the virtual address of the second composite operation represents the second composite operation that needs to be performed.

Step 513: The storage device 200 receives the second operation request, and performs the second composite operation on the second data based on the second operation request. The virtual address of the second composite operation is associated with the operation rule of the second composite operation and a physical address of the required operation parameter.

A relationship between the virtual address of the second composite operation, the physical addresses of the operation rule of the second composite operation and the required operation parameter, and the logical addresses of the operation rule of the second composite operation and the required operation parameter is similar to a relationship between the virtual address of the first composite operation, the physical addresses of the operation rule of the first composite operation and the required operation parameter, and the logical addresses of the operation rule of the first composite operation and the required operation parameter. For details, refer to the foregoing content. Details are not described herein again.

The second operation request may use a format of an existing operation request for requesting data reading/writing. In other words, the second operation request may continue to use the format of the existing data reading/writing request, and a process of exchanging the operation request that carries the computing task between the processing device 100 and the storage device 200 is still the same as the exchanging process of the existing data reading/writing request. Certainly, in some scenarios, to determine that the second operation request is the operation request that carries the computing task, the second operation request may carry a pre-agreed operation identifier, and the operation identifier represents that the second operation request is the operation request that carries the computing task.

For the storage device 200, because the second operation request carries the virtual address of the second composite operation, the storage device 200 can determine, based on the virtual address of the second composite operation, that the second operation request is the operation request that carries the computing task. The storage device 200 may determine, based on the virtual address of the second composite operation, the physical address of the operation rule of the second composite operation and the physical address of the operation parameter required by the second composite operation, to determine the operation rule of the second composite operation and the operation parameter required by the second composite operation. The storage device 200 sequentially invokes, based on a plurality of basic operations indicated by the operation rule of the second composite operation and a performing sequence of the plurality of basic operations, hardware operators of the plurality of basic operations and operation parameters that are required by the plurality of basic operations and that are in the operation parameter required by the second composite operation, to complete the second composite operation.

For example, the logical address that is of the operation rule of the second composite operation and that is carried in the second operation request is the virtual address of the operation rule of the composite operation 2. After receiving the second operation request, the storage device 200 determines, based on the virtual address of the composite operation 2, the operation rule of the composite operation 2 and the operation parameter required by the composite operation 2 (where the operation parameter is configured by the processing device 100 in step 508 to step 510 for the storage device 200).

The storage device 200 may first perform the scanning operation to separately scan a plurality of pieces of data in the data address range P and a plurality of pieces of data in the data address range Q; then perform the addition operation to summarize the plurality of pieces of data in the data address range P and the plurality of pieces of data in the data address range Q; and then perform the sorting operation to sort the summarized plurality of pieces of data, and finally obtain the sorted plurality of pieces of data.

Inside the storage device 200, after the medium controller 220 receives the second operation request, because the plurality of pieces of data in the data address range P and the plurality of pieces of data in the data address range Q may be distributed in the plurality of medium arrays 212, that is, each medium array 212 in the plurality of medium arrays 212 may store a part of data in the plurality of pieces of data in the data address range P and the data address range Q, the medium controller 220 may send a second operation indication to the computing circuit logic 211 corresponding to the plurality of medium arrays 212, where the second operation indication carries the physical address of the operation rule of the second composite operation and the physical address of the operation parameter required by the second composite operation. The computing circuit logic 211 determines, based on the second operation indication, the operation rule of the composite operation 2 and the operation parameter required by the composite operation 2, and performs the composite operation 2.

For any computing circuit logic 211, the computing circuit logic 211 may invoke the operation parameter required by the composite operation 2 to sequentially perform the scanning operation, the filtering operation, and the data projection operation for data in the corresponding medium array 212. Because the medium array 212 corresponding to the computing circuit logic 211 may store only the part of data in the plurality of pieces of data in the data address range P and the data address range Q, the computing circuit logic 211 scans, combines, and sorts only the part of data.

After completing the composite operation 2, each computing circuit logic 211 sends the sorted data to the medium controller 220. The data that is fed back by the computing circuit logic 211 and that is received by the medium controller 220 is stored in the cache 230 in the storage device 200. The medium controller 220 may sort the received data fed back by each computing circuit logic 211, include the sorted data in a second operation response, and send the second operation response to the processing device 100, where the second operation response carries the data obtained after the second composite operation is performed.

In some scenarios, the processing device 100 may further update the operation rule of the composite operation and the operation parameter required by the composite operation that have been configured in the storage device 200. A manner in which the processing device 100 updates the operation rule of the composite operation and the operation parameter required by the composite operation that have been configured in the storage device 200 is similar to a manner in which the processing device 100 configures the operation rule of the composite operation (for example, step 502 or step 509) and the operation parameter required by the composite operation (for example, step 504 and step 505, or step 510 and step 511) for the storage device 200. A difference lies in that the first rule configuration request may carry the updated operation rule of the composite operation, and the first parameter configuration request may carry the updated operation parameter required by the composite operation.

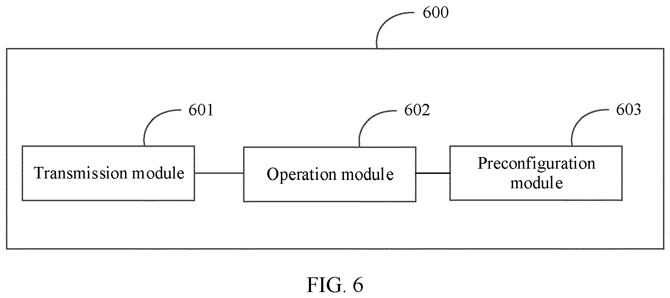

Based on a same inventive concept as the method embodiment, an embodiment of this application further provides a data operation apparatus. The data operation apparatus is configured to perform the method performed by the storage device in the method embodiment shown in FIG. 5. For related features, refer to the foregoing method embodiment. Details are not described herein again. As shown in FIG. 6, the data operation apparatus 600 includes a transmission module 601 and an operation module 602.

The transmission module 601 is configured to receive an operation request from a processing device, where the operation request is used to request to perform a first operation; and
the operation module 602 is configured to: obtain, based on the operation request, an operation rule of the first operation and an operation parameter required by the first operation, where the operation rule of the first operation describes a plurality of second operations obtained after the first operation is split and a performing sequence of the plurality of second operations, and the operation parameter required by the first operation includes operation parameters required by the plurality of second operations; and sequentially invoke, based on the performing sequence of the plurality of second operations, hardware operators of the plurality of second operations and the operation parameters required by the plurality of second operations, to perform the plurality of second operations.

In a possible implementation, the transmission module 601 receives a rule configuration request from the processing device, where the rule configuration request is used to request to configure the operation rule of the first operation, and the rule configuration request carries the operation rule of the first operation and a logical address of the operation rule of the first operation; and the operation module 602 stores the operation rule of the first operation in a storage location indicated by the logical address of the operation rule of the first operation.

In a possible implementation, the transmission module 601 receives a parameter configuration request from the processing device, where the parameter configuration request is used to request to configure the operation parameter required by the first operation, and the parameter configuration request carries the operation parameter required by the first operation and a logical address of the operation parameter required by the first operation; and the operation module 602 stores the operation rule required by the first operation in a storage location indicated by the logical address of the operation parameter required by the first operation.

In a possible implementation, the apparatus further includes a preconfiguration module 603. The preconfiguration module 603 may reserve, at a request of the processing device, the storage locations for the operation rule of the first operation and the operation parameter required by the first operation, where the logical addresses of the storage locations of the operation rule of the first operation and the operation parameter required by the first operation are allocated by the processing device.

In a possible implementation, the preconfiguration module 603 has reserved the storage locations reserved for the operation rule of the first operation and the operation parameter required by the first operation, and the transmission module 601 provides, for the processing device, the logical addresses of the operation rule of the first operation and the operation parameter required by the first operation.

In a possible implementation, the operation request includes a virtual address of the first operation, and the virtual address of the first operation is separately associated with the storage locations of the operation rule of the first operation and the operation parameter required by the first operation. When obtaining, based on the operation request, the operation rule of the first operation and the operation parameter required by the first operation, the operation module 602 obtains, from the storage locations associated with the virtual address of the first operation, the operation rule of the first operation and the operation parameter required by the first operation.

In a possible implementation, the operation module 602 obtains the virtual address configured by the processing device for the first operation, where the virtual address of the first operation indicates to perform the first operation; and the operation module 602 establishes an association between the virtual address of the first operation and each of the storage locations of the operation rule of the first operation and the operation parameter required by the first operation.

It should be noted that, in embodiments of this application, division into modules is an example, and is merely logical function division. During actual implementation, another division manner may be used. Functional modules in embodiments of this application may be integrated into one processing module, or each of the modules may exist alone physically, or two or more modules may be integrated into one module. The integrated module may be implemented in a form of hardware, or may be implemented in a form of a software functional module.

All or some of the foregoing embodiments may be implemented by software, hardware, firmware, or any combination thereof. When software is used to implement embodiments, the foregoing embodiments may be implemented completely or partially in a form of a computer program product. The computer program product includes one or more computer instructions. When the computer program instructions are loaded or executed on a computer, the procedure or functions according to embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid-state drive, SSD).

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Clearly, a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A data operation method, wherein the method is applied to a storage device, and the method comprises:
receiving an operation request from a processing device, wherein the operation request is used to request to perform a first operation;
obtaining, based on the operation request, an operation rule of the first operation and an operation parameter required by the first operation, wherein the operation rule of the first operation describes a plurality of second operations obtained after the first operation is split and a performing sequence of the plurality of second operations, and the operation parameter required by the first operation comprises operation parameters required by the plurality of second operations; and
sequentially invoking, based on the performing sequence of the plurality of second operations, hardware operators of the plurality of second operations and the operation parameters required by the plurality of second operations, to perform the plurality of second operations.

2. The method according to claim 1, wherein before the receiving an operation request from a processing device, the method further comprises:
receiving a rule configuration request from the processing device, wherein the rule configuration request is used to request to configure the operation rule of the first operation, and the rule configuration request carries the operation rule of the first operation and a logical address of the operation rule of the first operation; and
storing the operation rule of the first operation in a storage location indicated by the logical address of the operation rule of the first operation.

3. The method according to claim 1 or 2, wherein before the receiving an operation request from a processing device, the method further comprises:
receiving a parameter configuration request from the processing device, wherein the parameter configuration request is used to request to configure the operation parameter required by the first operation, and the parameter configuration request carries the operation parameter required by the first operation and a logical address of the operation parameter required by the first operation; and
storing the operation parameter required by the first operation in a storage location indicated by the logical address of the operation parameter required by the first operation.

4. The method according to any one of claims 1 to 3, wherein the method further comprises:
reserving, at a request of the processing device, the storage locations for the operation rule of the first operation and the operation parameter required by the first operation, wherein the logical addresses of the storage locations of the operation rule of the first operation and the operation parameter required by the first operation are allocated by the processing device.

5. The method according to any one of claims 1 to 3, wherein the storage device has reserved the storage locations reserved for the operation rule of the first operation and the operation parameter required by the first operation, and the method further comprises:
providing, for the processing device, the logical addresses of the operation rule of the first operation and the operation parameter required by the first operation.

6. The method according to any one of claims 1 to 5, wherein the hardware operators of the plurality of second operations are hardware logics built in the storage device.

7. The method according to any one of claims 1 to 6, wherein the operation request comprises a virtual address of the first operation, the virtual address of the first operation is separately associated with the storage locations of the operation rule of the first operation and the operation parameter required by the first operation, and the obtaining, based on the operation request, an operation rule of the first operation and an operation parameter required by the first operation comprises:
obtaining, from the storage locations associated with the virtual address of the first operation, the operation rule of the first operation and the operation parameter required by the first operation.

8. The method according to claim 7, wherein the method further comprises:
obtaining the virtual address configured by the processing device for the first operation; and
establishing an association between the virtual address of the first operation and each of the storage locations of the operation rule of the first operation and the operation parameter required by the first operation.

9. The method according to any one of claims 1 to 8, wherein the storage device comprises a medium chip, the medium chip comprises a medium array and a computing circuit logic, the medium array is configured to store data, the computing circuit logic is configured to perform the first operation on data in the medium array or data to be written into the medium array, and the medium array and the computing circuit logic are located in the storage device in a stacked form.

10. The method according to claim 9, wherein the computing circuit logic comprises a cache and the hardware operators of the plurality of second operations, and the cache stores the operation rule of the first operation and the operation parameter required by the first operation.

11. The method according to any one of claims 1 to 10, wherein the storage device and the processing device are connected through a system bus.

12. A storage device, wherein the storage device comprises at least one medium chip, and the medium chip comprises a medium array and a computing circuit logic;
the medium array is configured to store data; and
the computing circuit logic is configured to: obtain an operation rule of a first operation and an operation parameter required by the first operation, wherein the operation rule of the first operation describes a plurality of second operations obtained after the first operation is split and a performing sequence of the plurality of second operations, and the operation parameter required by the first operation comprises operation parameters required by the plurality of second operations; and perform the first operation on data in the medium array based on the operation rule of the first operation and the operation parameter required by the first operation.

13. The device according to claim 12, wherein the computing circuit logic comprises hardware operators of the plurality of second operations and a cache, the cache stores the operation rule of the first operation and the operation parameter required by the first operation, and the computing circuit logic is configured to:
obtain, from the cache, the operation rule of the first operation and the operation parameter required by the first operation; and
sequentially invoke, based on the performing sequence of the plurality of second operations, the hardware operators of the plurality of second operations and the operation parameters required by the plurality of second operations, to perform the plurality of second operations on the data in the medium array.

14. The device according to claim 12 or 13, wherein the medium array and the computing circuit logic are placed in a stacked manner.

15. The device according to any one of claims 12 to 14, wherein the storage device further comprises a medium controller; and
the medium controller is configured to: receive a rule configuration request from a processing device, wherein the rule configuration request is used to request to configure the operation rule of the first operation, and configure the operation rule of the first operation for the computing circuit logic; and receive a parameter configuration request from the processing device, wherein the parameter configuration request is used to request to configure the operation parameter required by the first operation, and configure, for the computing circuit logic, the operation parameter required by the first operation.

16. The device according to claim 15, wherein
the medium controller is further configured to: receive an operation request from the processing device, wherein the operation request is used to request to perform the first operation; and send an operation indication to the computing circuit logic, wherein the operation indication indicates the computing circuit logic to perform the first operation.

17. A data operation apparatus, wherein the apparatus is deployed in a storage device, and the apparatus comprises a transmission module and an operation module;
the transmission module is configured to receive an operation request from a processing device, wherein the operation request is used to request to perform a first operation; and
the operation module is configured to: obtain, based on the operation request, an operation rule of the first operation and an operation parameter required by the first operation, wherein the operation rule of the first operation describes a plurality of second operations obtained after the first operation is split and a performing sequence of the plurality of second operations, and the operation parameter required by the first operation comprises operation parameters required by the plurality of second operations; and sequentially invoke, based on the performing sequence of the plurality of second operations, hardware operators of the plurality of second operations and the operation parameters required by the plurality of second operations, to perform the plurality of second operations.

18. The apparatus according to claim 17, wherein
the transmission module is further configured to receive a rule configuration request from the processing device, wherein the rule configuration request is used to request to configure the operation rule of the first operation, and the rule configuration request carries the operation rule of the first operation and a logical address of the operation rule of the first operation; and
the operation module is further configured to store the operation rule of the first operation in a storage location indicated by the logical address of the operation rule of the first operation.

19. The apparatus according to claim 17 or 18, wherein
the transmission module is further configured to receive a parameter configuration request from the processing device, wherein the parameter configuration request is used to request to configure the operation parameter required by the first operation, and the parameter configuration request carries the operation parameter required by the first operation and a logical address of the operation parameter required by the first operation; and
the operation module is further configured to store the operation rule required by the first operation in a storage location indicated by the logical address of the operation parameter required by the first operation.

20. A computer storage medium, wherein the computer-readable storage medium stores computer-executable instructions, and the computer-executable instructions are used to enable a computer to perform the method according to any one of claims 1 to 11.
